Europäisches Patentamt

European Patent Office

Office européen des brevets

(11) Veröffentlichungsnummer: **0 004 869**
**B1**

(12) **EUROPÄISCHE PATENTSCHRIFT**

(45) Veröffentlichungstag der Patentschrift: **28.07.82**

(21) Anmeldenummer: **79100783.4**

(22) Anmeldetag: **15.03.79**

(51) Int. Cl.³: **C 08 G 63/52,**
**C 08 G 63/22**

(54) **Verfahren zur Herstellung thixotroper ungesättigter Polyesterharzlösungen.**

(30) Priorität: **25.04.78 AT 2945/78**

(43) Veröffentlichungstag der Anmeldung:
**31.10.79 Patentblatt 79/22**

(45) Bekanntmachung des Hinweises auf die Patenterteilung:
**28.07.82 Patentblatt 82/30**

(84) Benannte Vertragsstaaten:
**CH DE FR GB IT**

(56) Entgegenhaltungen:
**DE - A - 2 622 913**
**US - A - 3 632 545**
**US - A - 4 081 496**

(73) Patentinhaber: **Vianova Kunstharz**
**Aktiengesellschaft**
**A-8402 Werndorf (AT)**

(72) Erfinder: **Nowak, Peter, Dipl.-Ing. Dr.**
**Im Vogelsang 7**
**A-8045 Graz (AT)**
Erfinder: **Grobbauer, Peter**
**Holzackerweg 3**
**A-8054 Pirka (AT)**

(74) Vertreter: **Berendt, Thomas, Dr.rer.nat. Dipl.-**
**Chem.**
**Patentanwälte Dr.rer.nat. Dipl.-Chem. Th. Berendt**
**Dr.Ing. Hans Leyh Innere Wiener Strasse 20/III**
**D-8000 München 80 (DE)**

## Verfahren zur Herstellung thixotroper ungesättigter Polyesterharzlösungen

Bei der Herstellung von Werkstücken aus verstärkten ungesättigten Polyesterharzen ist es in vielen Fällen erwünscht oder notwendig, daß die eingesetzten Harzlösungen in ihrem Fließverhalten einen mehr oder weniger starken thixotropen Charakter zeigen. Dadurch wird erreicht, daß die an senkrechten oder geneigten Flächen aufgebrachten Schichten nicht abrinnen. Dies gilt insbesondere für Laminierharze und Feinschichtharze (letztere auch als Gelcoat- bzw. Topcoatharze bezeichnet), welche in Schichtstärken zwischen 300 und 600 $\mu$m aufgebracht werden. Weiters werden thixotrope Harze eingesetzt, wenn bestimmte Farbeffekte erzielt werden sollen, wie dies z.B. bei der Knopferzeugung o.ä. der Fall ist.

Die Thixotropierung ungesättigter Polyesterharzlösungen erfolgt durch organische Verbindungen bzw. durch anorganische Füllstoffe, wie hochdisperse Kieselsäuren und ähnliche mineralische Stoffe. Die genannten Zusatzstoffe werden mit Hilfe von hochtourigen Mischern, Walzen, Knetern o.ä. in der Lösung des Polyesterharzes in copolymerisierbaren Monomeren dispergiert, wobei bei Laminierharzen 0,5—1,5 Gew.-%, bei Feinschichtharzen 2—3 Gew.-% eingesetzt werden.

Die bisher praktizierten Verfahren, wie sie z.B. in dem Standardwerk von Peter H. Selden, "Glasfaserverstärkte Kunststoffe", Springer Verlag Berlin 1967, beschrieben werden, weisen jedoch eine Reihe von Nachteilen auf, welche insbesonders bei der Herstellung großer Mengen thixotroper Polyesterharzlösungen sowohl wirtschaftliche als auch technische Folgen haben:

Styrol oder ähnliche Monomere, in denen diese Polyesterharze gelöst sind, zeigen aufgrund ihres weitergehend apolaren Charakters ein schlechtes Dispergiervermögen für die Thixotropiermittel. Dadurch ist est für die Erzielung des entsprechenden Effektes nötig, Geräte einzusetzen, welche eine große Dispergierleistung aufweisen, oder größere Thixotropiermittelmengen anzuwenden.

Zum anderen müssen bei der bisher üblichen Methode der Einarbeitung der Thixotropiermittel in die Polyesterharzlösung große Harzmengen manipuliert werden, was sowohl aus wirtschaftlichen, als auch, wegen der verdunstenden Monomeren, aus arbeitshygienischen Gründen nachteilig ist und ebenfalls aufwendige Einrichtungen nötig macht.

Ein weiterer Nachteil der üblichen Verfahren liegt in der Wärmebelastung, welcher das Polyesterharz beim Einarbeiten des Thixotropiermittels ausgesetzt wird. Dadurch wird bekanntermaßen die Lagerstabilität dieser Harzlösung wesentlich beeinträchtigt.

Auch durch das in der US—A 3,632,545 beschriebene Verfahren zur Thixotropierung ungesättigter Polyester, bei welchem in die Lösung des Harzes in den copolymerisierbaren Monomeren, ein mit Diäthylenglykol vorbehandeltes mikrokristallines Silikat eingearbeitet wird, können diese Nachteile nicht überwunden werden. Überdies werden durch das im Polyester verbleibende polare Dispergiermittel die Beständigkeitseigenschaften der daraus hergestellten Werkstücke negativ beeinflußt. Dasselbe gilt auch für die in der DE—A 26 22 913 beschriebenen Methode, bei welcher der Polyesterharzlösung ein mit einer wäßrigen Seifenlösung oder einer verträglichen organischen Flüssigkeit, wie Toluol oder Styrol. aufgeschlossener Asbest zugemischt wird. Auch dieser Aufschluß erfolgt in Gegenwart polarer Dispergiermittel.

Auch die US—A 4,081,496 beschreibt ein Verfahren bei dem das Thixotropiermittel unter Zuhilfenahme eines Netzmittels mit den reaktiven Monomeren in das Polyesterharz eingebracht wird.

Aufgabe der vorliegenden Erfindung ist die Vermeidung dieser angegebenen Nachteile und damit die Herstellung auch großer Mengen thixotroper Lösungen ungesättigter Polyesterharze, wie sie für die Herstellung von Laminaten und Feinschichten allgemein eingesetzt werden. Einsatzgebiete für die Feinschichtharze sind z.B. der Bootsbau, die Herstellung von Fassadenplatten, Innenbeschichtungen von Behältern und der Anlagenbau, insbesondere dort, wo chemische Beständigkeiten gefordert werden.

Diese Aufgabe wurde dadurch gelöst, daß man das Thixotropiermittel bereits während der Herstellung des Polyesterharzes einarbeitet, und zwar durch Einsatz einer konzentrierten Paste des Thixotropiermittels in einem oder mehreren der verwendeten flüssigen oder leicht schmelzbaren Rohstoffe, welche bei der Harzherstellung zum Einsatz kommen. Insbesondere kommen für diesen Zweck die verschiedenen Glykole aufgrund ihrer Polarität und günstigen Dispergiereigenschaften in Betracht.

Das vorliegende erfindungsgemäße Verfahren zur Herstellung thixotroper Lösungen ungesättigter Polyesterharze in copolymerisierbaren Monomeren ist dadurch gekennzeichnet, daß man ein temperaturbeständiges Thixotropiermittel in einem oder mehreren der flüssigen oder durch Schmelzen verflüssigten Rohstoffe, welche bei der Herstellung des Polyesterharzes eingesetzt werden, dispergiert und diese Paste in entsprechenden Anteilen zusammen mit den anderen Rohstoffen bei der Veresterungsreaktion des ungesättigten Polyesterharzes einsetzt.

Es ist klar, daß das erfindungsgemäße Verfahren nur beim Einsatz von temperaturbeständigen Thixotropiermitteln, welche auch bei Temperaturen von 150—250°C chemisch nicht verändert werden, verwendbar ist. Diese Eigenschaft wird von den meist eingesetzten anorganischen Thixotropiermitteln erfüllt. Auch organische Substanzen vertragen diese Temperaturen in vielen Fällen ohne weiteres, wenn sie, wie dies bei der Harzherstellung erfolgt, in einer Schmelze und/oder Lösung vorliegen.

Vorzugsweise werden anorganische Thixotropiermittel eingesetzt, wie pyrogene oder gefällte synthetische kolloidale Kieselsäuren, Bentonite, bestimmte Kaolintypen, modifizierte Asbest- oder Smektittypen.

Ungesättigte Polyesterharze werden im allgemeinen durch Polyveresterung von Polycarbonsäuren oder Polycarbonsäureanhydriden mit Polyolen, im allgemeinen Glykolen, hergestellt, wobei gegebenenfalls auch monofunktionelle Säuren oder Alkohole mitverwendet werden. Einer der Bestandteile des Polyesters ist äthylenisch ungesättigt, im allgemeinen die Polycarbonsäure. Typische ungesättigte Polyesterharze werden hergestellt aus Dicarbonsäuren, wie Phthalsäure, Phthalsäureanhydrid, Adipinsäuren, Bernsteinsäure, Tetrahydrophthalsäure oder -anhydrid, Tetrabromphthalsäure oder -anhydrid, Maleinsäure oder -anhydrid, oder Fumarsäure. Beispiele für typische Glykole sind Äthylenglykol, Propylenglykol, Butylenglykol, Neopentylglykol, Diäthylenglykol, Dipropylenglykol, Polyäthylenglykol und Polypropylenglykol oder Diol-diäther von Diphenolen, z.B. des Bisphenol A. Gelegentlich werden zur Herstellung des Polyesters auch dreiwertige oder noch höherwertige Polyole verwendet, wie Trimethyloläthan, Trimethylolpropan oder Pentaerythrit. Im allgemeinen wird ein geringer stöchiometrischer Glykolüberschuß bei der Herstellung des ungesättigten Polyesters angewendet.

Die Veresterung erfolgt im Azeotropverfahren oder dem Schmelzkondensationsverfahren. Nach Fertigstellung wird das Harz meist durch Zufließenlassen der Harzschmelze zum inhibitorhältigen copolymerisierbaren Monomeren zugegeben, wobei auf die Einhaltung einer maximalen Temperatur sorgfältig geachtet werden muß.

Als Dispergiermedium für das erfindungsgemäße Verfahren können alle flüssigen Rohstoffe, wie sie bei der Polyesterherstellung zum Einsatz kommen, verwendet werden. Außerdem können mit geringem technischen Aufwand auch die festen Rohstoffe, deren Schmelzpunkt nicht zu hoch liegt, zur Herstellung der Thixotropiermittelpaste herangezogen werden. Aus diesen Rohstoffen, vorteilhafterweise den flüssigen oder leicht schmelzbaren Glykolen, werden Thixotropiermittelpasten hergestellt, welche 3 bis 30 Gew.-% des Thixotropiermittels und 70 bis 97 Gew.-% des zur Dispergierung herangezogenen Rohstoffes enthalten. Diese, vorzugsweise fließfähigen Pasten werden dem Reaktionsansatz in dem Maße zugegeben, wie es dem angestrebten Gehalt an Thixotropiermittel im Endprodukt entspricht. Die Herstellung des Polyesterharzes erfolgt dann in Gegenwart des Thixotropiermittels in der üblichen Weise. Überraschenderweise entstehen bei dieser Verfahrensweise an den Reaktorwänden keine Ablagerungen, sodaß auch die Reinigung des Reaktors bzw. des Lösungsbehälters keine Schwierigkeiten bereitet. Ebenso tritt auch keine Verfärbung des Produktes ein.

Dagegen ergeben sich durch das erfindungsgemäße Verfahren wirtschaftliche und technische Vorteile, von denen einige auch für den Fachmann nicht zu erwarten waren.

Infolge des polaren Dispergiermediums erfolgt die Dispergierung des Thixotropiermittels sehr leicht, wodurch der Einsatz von weniger aufwendigen Geräten, z.B. auch von schnellaufenden Propellerrührwerken möglich ist. Da die Menge, welche für das erfindungsgemäße Verfahren im Dispergiergerät verarbeitet werden muß, wesentlich kleiner ist als bei der bisher angewandten Methode, sind wesentlich kürzere Belegzeiten für die Geräte erforderlich. Die Menge der zu verarbeitenden Masse liegt in fast allen Fällen unter 10% der Menge, welche nach dem üblichen Verfahren durchgesetzt werden muß.

Die Dispergierung erfolgt in Abwesenheit der toxischen und relativ flüchtigen Monomeren, wodurch aufwendige Schutzvorrichtungen eingespart werden können. Ebenso ist die eventuell auftretende Wärme beim Dispergiervorgang ohne Einfluß auf das Endprodukt. Die Pasten können selbstverständlich auch längere Zeit und mit weniger Rücksicht auf die Umgebungstemperatur gelagert werden, als dies bei einer Paste auf Basis einer Polyesterharzlösung im Monomeren möglich wäre.

Überraschenderweise wird als zusätzlicher Effekt, vor allem beim Einsatz von hochdisperser Kieselsäure, eine Verkürzung der Reaktionszeit bis zu 50% erreicht, was wiederum zu einer besseren Ausnützung der Reaktorkapazität führt.

Im Fertigprodukt ist durch den besseren und gleichmäßigeren Aufschluß des Thixotropiermittels im polaren Dispergiermedium eine wesentliche Erhöhung der Gleichmäßigkeit der Thixotropierstärke zu beobachten. Durch die große Dispersität kann auch in vielen Fällen die Menge des Thixotropiermittels zur Erzielung eines bestimmten Effektes verringert werden, was wiederum eine Verbesserung der chemischen Widerstandsfähigkeit und Witterungsbeständigkeit der Werkstücke ergibt. Auch dieser Effekt war für den Fachmann nicht vorhersehbar, da eher angenommen werden mußte, daß durch das bei der Veresterung entstehende Reaktionswasser bei der ausgeprägten Fähigkeit des Wassers zur H-Brückenbildung Störungen im Thixotropierverhalten auftreten könnten.

Da überdies die fertige Polyesterharzlösung keiner zusätzlichen thermischen Belastung ausgesetzt ist, erhöht sich auch die Lagerstabilität der Endprodukte.

Da z.B. Glykolpasten bei gleichem Thixotropiermittelanteil wesentlich niedrigviskoser sind als entsprechende Pasten auf Basis von Polyesterharzlösungen, können die beim erfindungsgemäßen Verfahren verwendeten Pasten wesentlich konzentrierter angesetzt werden. Andererseits ist die Einstellung einer gleichbleibenden Pastenviskosität wesentlich einfacher, was bei Dispergiermaschinen mit Zwangsdurchlauf (Kolloidmühlen, Ultraturrax, Ultraschalldispergatoren etc.) Umrüstzeiten einspart.

Beim Einsatz von festen Polyesterrohstoffen zur Dispergierung des Thixotropiermittels wird in Schmelze gearbeitet. Die Lagerung der "Thixotropierungspaste" erfolgt dann vorteilhafterweise in gebrochenem Zustand, wodurch die Beschickung des Reaktors vereinfacht wird.

Die folgenden Beispiele dienen zur näheren Erläuterung der Erfindung.

Herstellung der Thixotropierungspasten
Paste A

In 220 g Polypropylenglykol werden mit Hilfe eines Zahnscheibenrührwerkes (Dissolver) 55 g einer hochdispersen synthetischen Kieselsäure mit einer spezifischen Oberfläche nach BET von 380±30 m²/g, einer mittleren Größe der Primärteilchen von 7 nm und einem $SiO_2$—Gehalt von 99,8% dispergiert.

Paste B

Eine Propylenglykolpaste mit der Zusammensetzung der Paste A wird in einem üblichen schnellaufenden Propellerrührwerk hergestellt (Drehzahl 2000—2500 U/min).

Paste C

164 g Neopentylglykol werden bei ca. 120°C geschmolzen und in einem Zahnscheibenrührwerk mit 36 g eines Thixotropiermittels auf Basis eines aufgeschlossenen Chrysotil-Asbests mit einer spezifischen Oberfläche nach BET von ca. 50 m²/g und den Hauptbestandteilen $SiO_2$ (44%) und MgO (38%) dispergiert. Der Thixo-tropiermittelanteil in der Paste beträgt 18%.

In gleicher Weise kann auch z.B. TCD-Alkohol D (bei mind. 50—60°C) oder der Propylenglykoldiäther des Bisphenol A (bei mind. 70—90°C) eingesetzt werden. (TCD-Alkohol D=Tri-cyclodecandiol)

Beispiel 1:
a) Thixotropierung gemäß Stand der Technik (Laminierharz-typ)

143 g Propylenglykol (1,88 Mol) werden mit 118,5 g Phthalsäureanhydrid (0,8 Mol) und 98 g Maleinsäureanhydrid (1 Mol) in üblicher Weise im Azeotropverfahren bis zu einer Säurezahl von 40—45 mg KOH/g verestert. Das Harz wird mit Styrol bis zu einem Festkörpergehalt von 60% verdünnt und mit 85 ppm Hydrochinon stabilisiert.

Anschließend wird in der Harzlösung 1 Gew.-% der in Paste A verwendeten hochdispersen Kieselsäure mittels eines Zahnscheibenrührwerkes dispergiert.

Erfindungsgemäßes Verfahren
b) Thixotropierung mit Paste A

Analog 1 a) wird ein ungesättigtes Polyesterharz hergestellt, wobei anstelle des dort angegebenen Propylenglykols eine Mischung von 27,5 g Paste A (0,29 Mol Propylenglykol) und 121 g Propylenglykol (1,59 Mol) eingesetzt wird.

c) Thixotropierung mit Paste B

Es wird wie im Punkt 1 b) verfahren, doch anstelle der Paste A die gleiche Menge Paste B eingesetzt.

Die Kennwerte der verschiedenen Versuche sind in Tabelle 1 zusammengefaßt.

Beispiel 2:
a) Thixotropierung gemäß Stand der Technik (Feinschichtharztyp)

135,4 g Neopentylglykol (1,3 Mol) werden mit 99,7 g Isophthalsäure (0,6 Mol) und 58,8 g Maleinsäureanhydrid (0,6 Mol) in der üblichen Weise im Azeotropverfahren bis zu einer Säurezahl von 15—20 mg KOH/g verestert. Das Harz wird mit Styrol bis zu einem Festkörpergehalt von 60% verdünnt und mit 500 ppm Hydrochinon inhibiert. Die Harzlösung wird in einem Dissolver mit 3 Gew.-% (bezogen auf die Harzlösung) des in der Paste C verwendeten Thixotropiermittels verarbeitet.

b) Thixotropierung nach dem erfindungsgemäßen Verfahren

62 g Paste C (0.5 Mol Neopentylglykol), 83,4 g Neopentylglykol, 99,7 g Isophthalsäure (0,6 Mol) und 58,8 g Maleinsäureanhydrid werden gemäß 2 a) verestert, in Styrol gelöst und inhibiert.

Die Thixotropiermittelmenge beträgt 2,6 Gew.-%, bezogen auf Harzlösung.

Die Kennwerte sind in der Tabelle 1 zusammengefaßt.

TABELLE 1

| Beispiel | Reaktor-belegzeit/ Stunden | Viskosität/ sec | Thix.-[2] Index | Lager-[3] beständigkeit Tage/70°C | Sedimentation[4] 50°C | Zentrifuge (5000 U/min 30 min. |
|---|---|---|---|---|---|---|
| 1a | 15 | 125[1a] | 1,16 | 5 | 25 Tge. SED | SED |
| 1b | 9,5 | 128[1a] | 1,17 | 11 | 40 Tge. i.O. | i.O.[5] |
| 1c | 10 | 124[1a] | 1,16 | 10,5 | 35 Tge. i.O. | i.O. |
| 2a | 28 | 40[1b] | 1,25 | 6 | — | — |
| 2b | 22 | 41[1b] | 1,25 | 10 | — | — |

[1a] Die Viskosität wird nach gutem Durchrühren der Probe der nicht weiter verdünnten Harzlösung mit dem DIN-Becher (DIN 53 211, Düse 4 mm, 20°C) gemessen.

[1b] Die Viskosität wird nach Verdünnen (100 g Harz+30 g Styrol) nach gutem Durchrühren mit einem DIN-Becher (Düsendurchmesser 6 mm) bei 20°C gemessen. Die gemäß 1a) und 1b) gefundenen Werte sind Relativwerte.

[2] Der Thixotropieindex ist der Quotient aus den scheinbaren Viskositäten vor bzw. nach der Zerstörung der Thixotropie (gemessen mit BROOKFIELD-Viskosimeter RVT bei 20°C).

[3] Endpunkt der Prüfung ist die Gelierung der Probe.

[4] Bei Sedimentation (SED) wird eine deutlich sichtbare Zone eines überstehenden klaren Harzes beobachtet.

[5] in Ordnung (Kann in üblicher Weise verarbeitet werden)

## Patentansprüche

1. Verfahren zur Herstellung thixotroper Lösungen ungesättigter Polyesterharze in copolymerisierbaren Monomeren, dadurch gekennzeichnet, daß man ein temperaturbeständiges Thixotropiermittel in einem oder mehreren der flüssigen oder durch Schmelzen verflüssigten Rohstoffe, welche bei der Herstellung des Polyesterharzes eingesetzt werden, dispergiert und diese Paste in entsprechenden Anteilen zusammen mit den anderen Rohstoffen bei der Veresterungsreaktion des ungesättigten Polyesterharzes einsetzt.

2. Verfahren gemäß Anspruch 1, dadurch gekennzeichnet, daß man Thixotropiermittel einsetzt, welche bei Temperaturen bis max. 150—250°C chemisch nicht verändert werden.

3. Verfahren gemäß den Ansprüchen 1 und 2, dadurch gekennzeichnet, daß man zur Dispergierung die für die Herstellung des Polyesterharzes vorgesehenen Glykole anteilsweise oder zur Gänze heranzieht.

4. Verfahren gemäß den Ansprüchen 1 bis 3, dadurch gekennzeichnet, daß man Pasten einsetzt, welche 3 bis 30 Gew.-% Thixotropiermittel und 70 bis 97 Gew.-% des zur Dispergierung herangezogenen Rohstoffes enthalten.

5. Verfahren gemäß den Ansprüchen 1 bis 4, dadurch gekennzeichnet, daß man als Thixotropiermittel anorganische Substanzen, insbesondere hochdisperse Kieselsäure, einsetzt.

6. Verfahren gemäß den Ansprüchen 1 bis 5, dadurch gekennzeichnet, daß man fließfähige Pasten des Thixotropiermittels als Polyesterrohstoff einsetzt.

## Claims

1. Process for the manufacture of thixotropic solutions of unsaturated polyester resins in copolymerizable monomers characterized in that a thixotropic agent which is resistant to elevated temperatures is dispersed in one or several of the starting materials which are used for preparing the polyester resin and which are liquid or liquified by melting and in that the paste obtained is used in corresponding amounts together with the other starting materials in carrying out the esterification reaction forming the unsaturated polyester resin.

2. Process as claimed in claim 1 characterized in that thixotropic agents are used which remain chemically unchanged at temperatures up to a maximum of 150 to 250°C.

3. Process as claimed in claims 1 and 2, characterized in that for dispersing part or all of the glykols intended for preparing the polyester resin is used.

4. Process as claimed in claims 1 to 3, characterized in that pastes are used which contain 3 to 30% by weight of the thixotropic agent and 70 to 97% by weight the starting material used for dispersing.

5. Process as claimed in claims 1 to 4, characterized in that as the thixotropic agent inorganic substances and in particular highly dispersed silica is used.

6. Process as claimed in claims 1 to 5 characterized in that flowable pastes of the thixotropic agent are used as starting material for the polyester.

**Revendications**

1. Procédé pour la préparation de solutions thixotropiques de polyesters non-saturés dans des monomères copolymerisables, caractérisé en ce qu' un agent thixotropique résistant aux températures élevées est dispersé dans une ou plusieures matières premières, liquides ou rendues liquides par fusion au cours de la préparation de la résine polyester et que la pâte ainsi formée est utilisée en proportion correspondant aux autres matières premières en estérification formant la résine polyester non-saturée.

2. Procédé selon la revendication 1, caractérisé en ce qu'on utilise un agent thixotropique qui ne change pas chimiquement à des températures entre 150 et 250°C max.

3. Procédé selon les revendications 1 et 2, caractérisé en ce que pour la dispersion on utilise en quantité totale ou partielle les glycols prévus pour la préparation de la résine polyester.

4. Procédé selon les revendications 1 à 3, caractérisé en ce qu'on utilise des pâtes renfermant de 3 à 30% en poids d'agent thixotropique et de 70 à 97% en poids de matière première utilisée pour la dispersion.

5. Procédé selon les revendications 1 à 4, caractérisé en ce qu'on utilise des substances inorganiques comme agent thixotropique, particulièrement l'acide fluosilisique micronisé.

6. Procédé selon les revendications 1 à 5, charactérisé en ce qu'on utilise des pâtes coulantes d'agent thixotropique comme matière première de la resine polyester.